# EUROPÄISCHE PATENTANMELDUNG

(11) **EP 2 377 719 A1**
(43) Veröffentlichungstag der Anmeldung: **19.10.2011**
(21) Anmeldenummer: 11161109.1
(22) Anmeldetag: 05.04.2011
(51) Int. Cl.: B60P 3/12

(54) **Fahrzeugabschleppeinrichtung**

(30) Priorität: 16.04.2010 DE 102010016486
(71) Anmelder: ProLux-Systemtechnik GmbH & Co. KG, 89134 Blaustein (DE)
(72) Erfinder: Windeisen, Georg, 89134, Blaustein (DE)
(74) Vertreter: Weber, Gerhard

(57) **Zusammenfassung**

Für eine Fahrzeug-Abschleppeinrichtung mit einer mittels einer Hubeinrichtung höhenverstellbaren Traganordnung zur Anhebung einer Achse eines abzuschleppenden Fahrzeugs wird vorgeschlagen, zusätzlich eine Sensoranordnung (ST,SV,SH,SM) zur Überwachung der Position der Traganordnung (TA) relativ zum Boden (BF), insbesondere einen Höhenmesseinrichtung vorzusehen und nach Maßgabe des Sensorsignals (AS,ASV,ASH,ASM) während des Fahrbetriebs des abschleppenden Fahrzeugs die Höhe der Traganordnung (TA) relativ zum abschleppenden Fahrzeug erforderlichenfalls nachzuführen.

## Beschreibung

Die Erfindung betrifft eine Fahrzeug-Abschleppeinrichtung.

Zum Abschleppen von Fahrzeugen sind Abschleppeinrichtungen gebräuchlich, welche eine an einem Schleppfahrzeug befestigte Traganordnung enthalten, die von dem Schleppfahrzeug nach hinten ragt und zum Abheben einer Achse eines abzuschleppenden Fahrzeugs vom Boden ausgebildet ist. Die Traganordnung ragt freitragend von dem Schleppfahrzeug nach hinten und ist nicht selbst durch Räder gegen den Boden abgestützt. Zum Abschleppen von Pkw sind solche Traganordnungen typischerweise als sogenannte Hubbrillen ausgebildet, welche zwei von einer Mittellängsebene seitlich beabstandete Rahmen aufweisen, welche jeweils eines von zwei Rädern der anzuhebenden Achse aufnehmen. Typischerweise wird die Vorderachse angehoben und das abzuschleppende Fahrzeug steht nur noch mit den Hinterrädern auf dem Boden auf. Die Traganordnungen können, insbesondere für größere abzuschleppende Fahrzeuge, auch in von den Hubbrillen abweichender Bauweise ausgeführt sein und auch an von den Rädern verschiedenen Teilen des abzuschleppenden Fahrzeugs angreifen. Die höhenverschwenkbar am Schleppfahrzeug befestigte Traganordnung wird zum Anheben des abzuschleppenden Fahrzeugs mit ihrem dem Schleppfahrzeug abgewandten Ende unter dem abzuschleppenden Fahrzeug positioniert und mittels einer am Schleppfahrzeug angeordneten Hubeinrichtung angehoben und in der angehobenen Position für den Abschleppvorgang gehalten.

Insbesondere in Parkhäusern oder anderen Umgebungen mit zwischen horizontalen Bodenflächen und geneigten Rampen wechselnder Fahrbahn erfordern solche Abschleppeinrichtungen häufig eine besonders sorgfältige Fahrweise, um Beschädigungen an dem abgeschleppten Fahrzeug, an der Traganordnung oder an der Fahrbahn zu vermeiden.

Der Erfindung liegt die Aufgabe zugrunde, eine Fahrzeug-Abschleppeinrichtung anzuregen, welche bei einfachem Gebrauch die genannten Schäden verhindert.

Die Erfindung ist im unabhängigen Anspruch 1 beschrieben. Die abhängigen Ansprüche enthalten vorteilhafte Ausgestaltungen und Weiterbildungen der Erfindung.

Durch die erfindungsgemäße Sensoranordnung, welche zur Überwachung der Position der Traganordnung relativ zum Boden ausgebildet ist und insbesondere am Schleppfahrzeug und/oder an der Traganordnung angeordnet sein kann, ergibt sich in Verbindung mit der über eine Steuereinrichtung steuerbaren Hubeinrichtung, mittels welcher die Höhenposition der Traganordnung relativ zum Boden und zum Schleppfahrzeug veränderbar ist, eine einfache und wirkungsvolle Möglichkeit, die Höhenposition der Traganordnung wechselnden Bodenverläufen anzupassen und die genannten Schäden zu vermeiden.

Ein von der Sensoranordnung erzeugtes Sensorsignal kann beispielsweise einer akustischen und/oder optischen Anzeigeeinrichtung im Wahrnehmungsbereich des Fahrers des Schleppfahrzeugs zugeleitet sein. Der Fahrer des Schleppfahrzeugs kann mittels einer Bedieneinrichtung ein Kommandosignal für die Steuereinrichtung auslösen. Eine optische Anzeige im Wahrnehmungsbereich des Fahrers des Schleppfahrzeugs ist insbesondere vorteilhaft bei Verwendung eines bildaufnehmenden Sensors in der Sensoranordnung, dessen Aufnahmebereich auf einen Bereich zwischen Schleppfahrzeug und geschlepptem Fahrzeug gerichtet ist und welcher ein Bildsignal als Sensorsignal erzeugt.

Vorzugsweise ist das wenigstens eine Sensorsignal der Sensoranordnung direkt der Steuereinrichtung zugeleitet, welche durch Auswertung des Sensorsignals automatisch ohne Zutun einer Bedienperson ein Steuersignal zur gegebenenfalls erforderlichen Ansteuerung der Hubeinrichtung für eine Änderung der Höhenposition der Traganordnung erzeugt.

Das wenigstens eine Sensorsignal wird dabei vorteilhafterweise als ein einen Abstand der Traganordnung vom Boden an einer Messposition der Traganordnung repräsentierendes Sensorsignal, nachfolgend auch kurz als Abstandssignal bezeichnet, durch die Sensoranordnung gewonnen. Vorzugsweise ist ein das Sensorsignal erzeugender Sensor der Sensoranordnung an der Messposition der Traganordnung angeordnet. Vorteilhafterweise befindet sich eine solche Messposition in einem mittleren Bereich der Längserstreckung der Traganordnung zwischen Schleppfahrzeug und Abstützung des geschleppten Fahrzeugs an der Traganordnung, wobei ein solcher mittlerer Bereich vorteilhafterweise wenigstens 25 % der genannten Längserstreckung von beiden Enden der Traganordnung beabstandet ist.

In vorteilhafter Weiterbildung kann die Sensoranordnung mehrere räumlich voneinander beabstandete Messpositionen an der Traganordnung bilden, welchen vorzugsweise jeweils einer von mehreren Sensoren zugeordnet ist. Insbesondere kann in vorteilhafter Ausführung vorgesehen sein, dass an dem dem Schleppfahrzeug abgewandten Ende der Traganordnung seitlich von einer Mittellängsebene der Traganordnung beabstandet zwei vorzugsweise symmetrisch zu der Mittellängsebene liegende Messpositionen vorgesehen sind, welche insbesondere für kritische Situationen bei schräger Anfahrt und/oder Kurvenfahrt im Bereich von Wechseln zwischen unterschiedlich geneigten Fahrbahnabschnitten geeignet sind.

In anderer vorteilhafter Ausführung können zwei Messpositionen der Sensoranordnung an der Traganordnung in unterschiedlicher Entfernung vom Schleppfahrzeug vorgesehen sein. Insbesondere kann bei einer längenveränderlich einstellbaren Traganordnung, bei welcher wenigstens zwei Teile in verschiedener gegenseitiger Position anordenbar, insbesondere teleskopierbar sind, vorgesehen sein, dass die Sensoranordnung eine Messposition an jedem der beiden Teile aufweist. Vorteilhafterweise kann ein weiteres Sensorsignal, welches eine Information über die eingestellte Länge der Traganordnung enthält, zusätzlich als ein nachfolgend als Längensignal bezeichnetes Sensorsignal ermittelt und der Steuereinrichtung zugeführt sein.

Ein Abstandssignal als Sensorsignal wird vorteilhafterweise mittels eines berührungslos messenden Sensors gewonnen, wobei ein solcher Sensor vorzugsweise nach dem Prinzip der Rückstreudetektion ausgebildet ist und einen Sender und einen Empfänger umfasst. Der Empfänger detektiert rückgestreute Anteile eines vom Sender in Richtung des Bodens abgestrahlten Sendersignals. Derartige Abstandssensoren sind als solche bekannt und gebräuchlich und sind daher an dieser Stelle nicht weiter erläutert. Vorzugsweise werden bei der erfindungsgemäßen Abschleppeinrichtung Ultraschall-Abstandssensoren zur Gewinnung von Abstandssignalen eingesetzt. Andere Sensortypen nach dem Rückstreuprinzip auf der Basis von Licht- oder Radarsignalen sind gleichfalls bekannt. Zur berührungslosen Abstandsmessung sind prinzipiell auch induktive oder kapazitive Sensoren geeignet. Als Beispiel für einen mechanischen Abstandssensor kann ein Sensorrad ohne Stützfunktionen höhenvariabel an der Traganordnung gehalten sein und auf dem Boden unter der Traganordnung abrollen und die Position des Sensorrads relativ zur Traganordnung als elektronisches Signal ermittelt und ausgewertet werden.

Die Steuereinrichtung ist vorteilhafterweise dafür eingerichtet, ein Abstandssignal als IST-Wert einem Schwellwertvergleich mit einem SOLL-Wert zu unterziehen und daraus ein Steuersignal zur Ansteuerung der Hubeinrichtung abzuleiten. Der SOLL-Wert kann vorteilhafterweise als ein Wertebereich vorgegeben sein, innerhalb dessen keine Veränderung der Höhenposition der Traganordnung durch die Steuereinrichtung veranlasst wird.

Die Steuereinrichtung kann in vorteilhafter Weiterbildung mehrere Sensorsignale, welche an unterschiedlichen Messpositionen der Traganordnung und/oder unter unterschiedlichen Winkelausrichtungen durch die Sensoranordnung erzeugt werden, kombiniert auswerten, um eine weiter verbesserte Anpassung des Steuerungsvorgangs an die jeweiligen Bodenverläufe zu ermöglichen.

Die Sensoranordnung ermittelt vorteilhafterweise fortlaufend ein oder mehrere Sensorsignale, welche als zeitkontinuierliche Analogsignale oder, insbesondere bei Erzeugung digitaler Sensorsignale, als zeitdiskrete Digitalwerte vorliegen können. In vorteilhafter Weiterbildung kann die Steuereinrichtung den Zeitverlauf eines oder mehrerer Sensorsignale auswerten. Die Sensoreinrichtung kann in weiterer Ausführung einen Neigungssensor enthalten, dessen Sensorsignal als Neigungssignal gleichfalls der Steuereinrichtung zugeführt und von dieser auswertbar sein kann.

In vorteilhafter Ausführung kann der Steuereinrichtung auch eine Information über die aktuelle Fahrgeschwindigkeit des Schleppfahrzeugs als Geschwindigkeitssignal zugeleitet sein, wobei ein solches Geschwindigkeitssignal durch das elektronische System des Schleppfahrzeugs bereit gestellt sein kann oder in anderer Ausführung durch die Sensoranordnung selbst, beispielsweise durch Dopplerauswertung, gewonnen werden kann. Ein solches Geschwindigkeitssignal kann insbesondere dahingehend ausgewertet werden, dass eine Nachführung der Höhenposition der Traganordnung in einer der beschriebenen Weisen durch die Steuereinrichtung nur bei Fahrgeschwindigkeiten unterhalb eines Geschwindigkeitsschwellwerts, welcher vorteilhafterweise maximal 10 km/h beträgt, erfolgt und bei Fahrgeschwindigkeiten oberhalb eines solchen Schwellwerts eine vorgebbare Festposition der Traganordnung relativ zum Schleppfahrzeug eingestellt und beibehalten wird.

Die Erfindung ist nachfolgend anhand bevorzugter Ausführungsbeispiele unter Bezugnahme auf die Abbildungen noch eingehend veranschaulicht. Dabei zeigt:
- Fig. 1: eine Abschleppsituation auf ebener Bodenfläche,
- Fig. 2: eine erste Problemsituation,
- Fig. 3: eine zweite Problemsituation,
- Fig. 4: die Anordnung eines Sensors an einer Traganordnung,
- Fig. 5: eine teleskopierbare Traganordnung mit zwei Sensoren,
- Fig. 6: eine Draufsicht auf eine Hubbrille mit seitlich angeordneten Sensoren,
- Fig. 7: eine Sensoranordnung mit unterschiedlichen Messrichtungen,
- Fig. 8: die Situation nach Fig. 2 mit nachgeführter Traganordnung,
- Fig. 9: die Situation nach Fig. 3 mit nachgeführter Traganordnung.

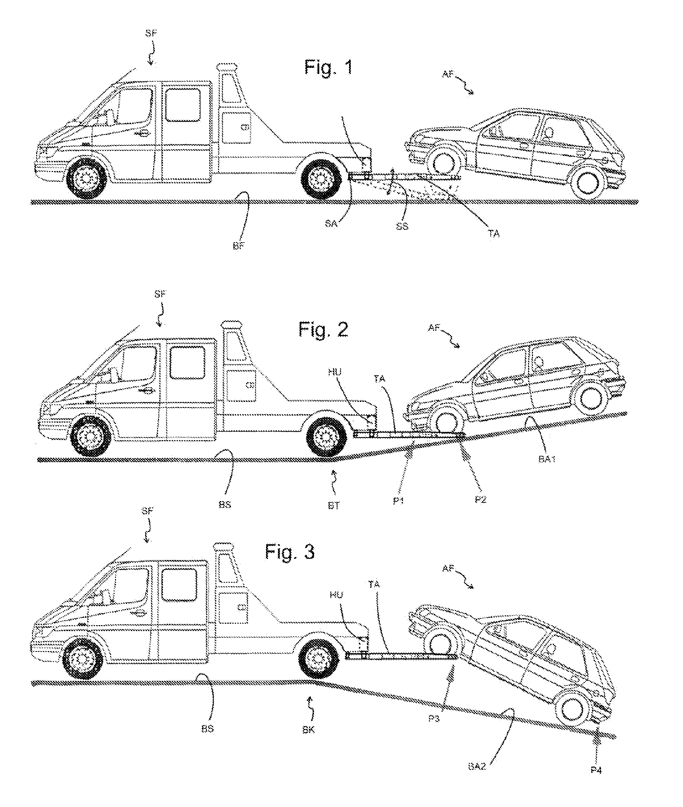

Fig. 1 zeigt in Seitenansicht eine Abschleppsituation auf einer ebenen Bodenfläche BF. Am Heck eines Schleppfahrzeugs SF ist eine Traganordnung TA befestigt, welche mittels einer mit dem Schleppfahrzeug SF verbundenen Hubeinrichtung HU in der Höhe verstellbar ist, wobei die Höhenverstellung als Schwenkbewegung SS um eine bezüglich des Schleppfahrzeugs SF ortsfeste Schwenkachse SA ausgebildet ist. In Fig. 1 ist mit durchbrochener Linie eine Ausgangsstellung dargestellt, in welcher die Traganordnung TA auf die Bodenfläche BF abgesenkt ist, um die Räder der Vorderachse eines abzuschleppenden Fahrzeugs AF aufzunehmen. Bei in Radaufnahmen der Traganordnung TA einliegenden Rädern des abzuschleppenden Fahrzeugs AF wird die Traganordnung TA mittels der Hubeinrichtung HU um die Schwenkachse SA nach oben verschwenkt in die mit durchgezogener Linie dargestellte Höhenposition der Traganordnung TA. Die Vorderachse des abzuschleppenden Fahrzeugs AF ist in dieser angehobenen Höhenposition der Traganordnung TA von der Bodenfläche BF abgehoben und das abzuschleppende Fahrzeug AF steht nur noch mit den Rädern der Hinterachse auf der Bodenfläche BF auf. Die in Fig. 1 mit durchbrochener Linie dargestellte Höhenposition der Traganordnung TA sei als Normalstellung bezeichnet, wobei eine solche Normalstellung je nach Art des abzuschleppenden Fahrzeugs AF unterschiedliche Höhenpositionen einnehmen kann. Der Abschleppvorgang erfolgt unter Beibehaltung der Normalstellung der Traganordnung TA relativ zum Schleppfahrzeug SF. Derartige Abschleppeinrichtungen sind gebräuchlich.

Fig. 2 zeigt eine erste, insbesondere für Parkhäuser typische Problemsituation beim Abschleppvorgang, wenn Schleppfahrzeug SF und abgeschlepptes Fahrzeug AF nicht auf einer gemeinsamen ebenen Fläche abrollen, sondern die Fläche BA1, auf welcher das abzuschleppende Fahrzeug AF abrollt, gegen die Bodenfläche BS, auf welcher zu diesem Zeitpunkt das Schleppfahrzeug SF abrollt, geneigt verläuft. In Fig. 2 sei angenommen, dass der Übergang von der Bodenfläche BS zu der Bodenfläche BA1 an einer Übergangsstelle BT über einen Winkel von weniger als 180° erfolgt. In dieser Stellung besteht an der mit P1 bezeichneten Stelle die Gefahr, dass die Frontpartie des geschleppten Fahrzeugs AF und die Traganordnung TA aneinander anliegen können und beschädigt werden können. An einer mit P2 bezeichneten weiteren Problemstelle kann das dem Schleppfahrzeug SF abgewandte Ende der Traganordnung mit der Bodenfläche PA1 in Berührung kommen, was zu einer Beschädigung der Traganordnung und/oder der Bodenfläche BA1 führen kann.

Fig. 3 zeigt eine zweite Problemsituation, bei welcher eine Bodenfläche BA2, auf welcher das abzuschleppende Fahrzeug AF abrollt, an einem Übergangsbereich BK um einen Winkel von mehr als 180° gegen die Bodenfläche BS, auf welcher das Schleppfahrzeug SF abrollt, geneigt verläuft. In diesem Fall besteht an der Problemstelle P3 eine Beschädigungsgefahr zwischen Traganordnung TA und abgeschlepptem Fahrzeug AF und/oder bei längerer Heckpartie des abgeschleppten Fahrzeugs an der mit P4 bezeichneten Problemstelle die Gefahr einer Beschädigung des Hecks des abgeschleppten Fahrzeugs und/oder der Bodenfläche BA2.

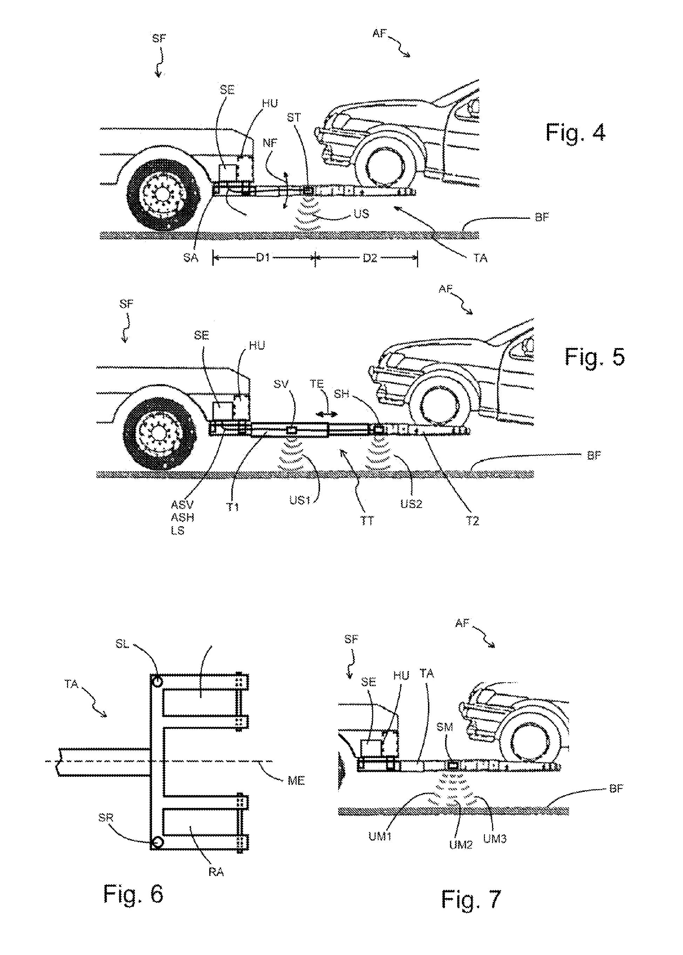

Fig. 4 zeigt in einem Ausschnitt aus der Normalstellung nach Fig. 1 schematisch die Anordnung eines Abstandssensors ST an der Traganordnung TA. Der Abstandssensor ST, welcher vorzugsweise als Ultraschall-Abstandssensor ausgebildet ist, strahlt ein Sendesignal US in Richtung der Bodenfläche BF und empfängt an der Bodenfläche BF rückgestreute Anteile des Sendesignals und erzeugt nach Maßgabe der rückgestreuten Signalanteile ein Sensorsignal, welches ein Maß für den Abstand des Sensors von der Bodenfläche BF bildet. Das Sensorsignal AS ist wie angedeutet, einer Steuereinrichtung SE am Schleppfahrzeug SF zugeführt. Die Steuereinrichtung SE erzeugt nach Maßgabe des Sensorsignals AS ein Steuersignal, mittels welchem die Hubeinrichtung HU angesteuert werden kann, um die Höhenposition der Traganordnung TA in ihrer Ausrichtung um die Schwenkachse SA relativ zum Schleppfahrzeug SF eventuell zu verändern. Die Veränderbarkeit der Höhenposition der Traganordnung TA relativ zum Schleppfahrzeug SF ist durch den gekrümmten Doppelpfeil NF angedeutet.

Der Sensor ST einer Sensoranordnung ist von dem schwenkachsenseitigen Ende der Traganordnung um eine Distanz D1, von dem dem Schleppfahrzeug SF abgewandten Ende der Traganordnung um einen Abstand D2 entfernt und liegt im skizzierten Beispiel annähernd in der Mitte der Längserstreckung der Traganordnung mit D1 = D2. Vorteilhafterweise betragen D1 und D2 bei anderer Positionierung des Sensors jeweils wenigstens 25 % der gesamten Längserstreckung D1 und D2 der Traganordnung TA.

Fig. 5 zeigt in zu Fig. 4 entsprechender Ansicht eine teleskopierbare Traganordnung TT mit einem ersten Tragabschnitt T1 auf Seiten des Schleppfahrzeugs SF und einem zweiten Tragabschnitt T2, welcher dem Schleppfahrzeug SF abgewandt angeordnet ist. Die Teleskopierbarkeit ist durch den geraden Doppelpfeil TE angedeutet. In diesem Beispiel ist ein erster Sensor SV an dem ersten Tragabschnitt T1 und ein zweiter Sensor SH an dem Tragabschnitt T2 angeordnet. Die beiden Abstandssensoren SV, SH erzeugen über Messsignal US1, US2 jeweils eigene Abstandssignale ASV, ASH, welche wiederum der Steuereinrichtung SE zugeführt sind. Zusätzlich kann vorteilhafterweise über einen nicht dargestellten weiteren Sensor ein Längensignal LS erzeugt werden, welches eine Information über die Auszuglänge der teleskopierbaren Traganordnung TT enthält. Die teleskopierbare Traganordnung TT kann auch mit nur einem Abstandssensor betrieben werden, welcher dann wie der Abstandssensor SH vorteilhafterweise an dem dem Schleppfahrzeug SF abgewandten Tragabschnitt T2 der Traganordnung angeordnet ist.

Fig. 6 zeigt eine Ansicht einer Traganordnung TA von unten. Die Traganordnung TA weist in an sich bekannter Weise symmetrisch zu einer Mittellängsebene ME liegende Radaufnahmen RA auf. In Fig. 6 ist dargestellt, dass Abstandssensoren SR, SL in vorteilhafter Anordnung von der Mittellängsebene ME beabstandet an der Radbrille angeordnet sein können. Die beiden Abstandssensoren SR, SL liefern vorzugsweise getrennte Abstandssignale an die Steuereinrichtung SE.

Fig. 7 zeigt einen an einer Traganordnung TA angeordneten Abstandssensor SM, welcher mehrere Abstandssignale entsprechend unterschiedlichen Winkelausrichtungen von emittierten und/oder empfangenen Ultraschallsignalen UM1, UM2, UM3 relativ zur Traganordnung TA erzeugt. Die unterschiedlichen Winkelausrichtungen können auch mit nur einem Sender und mehreren Empfängern oder umgekehrt realisiert sein.

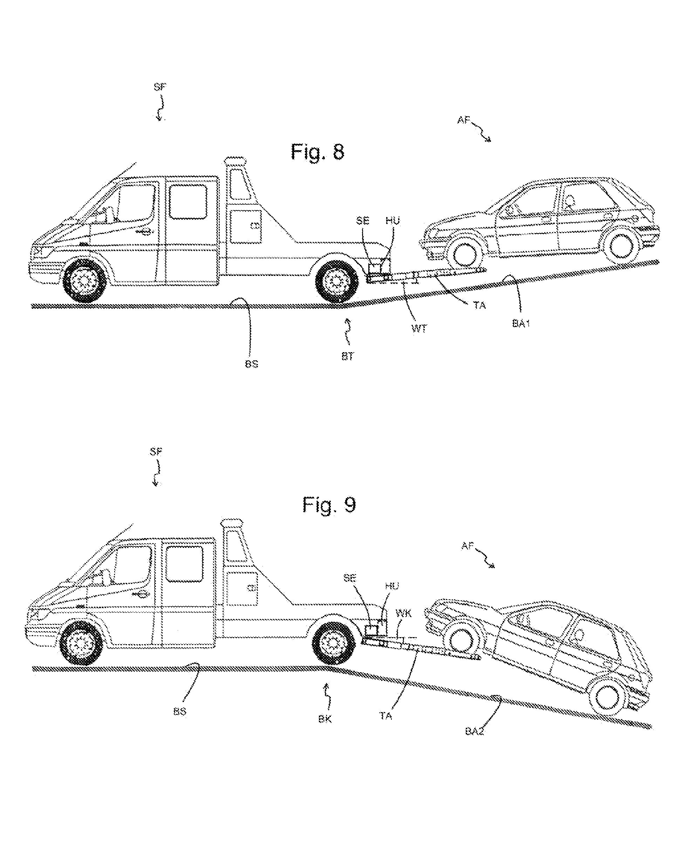

Fig. 8 zeigt eine Abschleppsituation mit zu Fig. 2 analogen Verhältnissen von Bodenflächen BS und BA1. Durch Anheben der Traganordnung TA um einen Hubwinkel WT gegenüber der in Fig. 2 dargestellten Normalstellung sind die in Fig. 2 mit P1 und P2 bezeichneten Problemstellen entschärft.

Fig. 9 zeigt eine Abschleppsituation mit zu Fig. 3 analogen Gegebenheiten von Bodenflächen BS und BA2. Hier ist die Traganordnung TA um einen Winkel WK gegenüber der Normalstellung abgesenkt, wodurch auch in dieser Position keine Beschädigungsgefahr an den in Fig. 3 mit P3 und P4 bezeichneten Stellen ergibt.

Für die Nachführung der Höhenposition der Traganordnung sind typischerweise kleine Winkel WT, WK ausreichend, welche insbesondere in der Regel kleiner sind als der anfängliche Hubwinkel beim Anheben des abzuschleppenden Fahrzeugs nach Fig. 1. Die Nachführbarkeit der Höhenposition der Traganordnung kann auf einen eingeschränkten Verstellbereich um die Normalstellung der Fig. 1 beschränkt sein, welcher ein Absenken der Traganordnung bis zu der in Fig. 1 mit unterbrochener Linie gezeichneten Unterfahrzeug im Fahrbetrieb verhindert.

Mit der Erfindung ist damit auf einfache und vorteilhafte Weise eine zuverlässige Verringerung oder Beseitigung der Gefahr von Beschädigungen während des Abschleppvorgangs in den in Fig. 2 und Fig. 3 dargestellten Situationen erreichbar.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Fahrzeug-Abschleppeinrichtung, welche eine an einem Schleppfahrzeug befestigte und von diesem nach hinten abstehende Traganordnung aufweist, wobei die Traganordnung an einem dem Schleppfahrzeug abgewandten Ende zum Abheben einer Achse eines abzuschleppenden Fahrzeugs vom Boden ausgebildet und über eine am Schleppfahrzeug angeordnete Hubeinrichtung in der Höhe verstellbar ist, **dadurch gekennzeichnet, dass** eine Sensoranordnung (ST, SV, SH, SM) zur Überwachung der Position der Traganordnung (TA) relativ zum Boden (BF, BS, BA1, BA2) und zur Erzeugung wenigstens eines Sensorsignals (AS, ASV ASH, ASM) vorgesehen ist und eine Steuereinrichtung (SE) zur Steuerung der Hubeinrichtung (HU) für eine Veränderung (NF) der Höhenposition der Traganordnung (TA) im Fahrbetrieb des Schleppfahrzeugs (SF) ausgebildet ist.

2. Einrichtung nach Anspruch 1, **dadurch gekennzeichnet, dass** die Sensoranordnung als ohne Bodenberührung messende Sensoranordnung ausgebildet ist.

3. Einrichtung nach Anspruch 1 oder 2, **dadurch gekennzeichnet, dass** die Sensoranordnung als nach dem Prinzip der Signalrückstreuung arbeitend ausgeführt ist.

4. Einrichtung nach Anspruch 3, **dadurch gekennzeichnet, dass** die Sensoranordnung Ultraschallwellen (US) emittiert und empfängt.

5. Einrichtung nach einem der Ansprüche 1 bis 4, **dadurch gekennzeichnet, dass** die Sensoranordnung wenigstens ein einen Bodenabstand der Traganordnung an wenigstens einer Messposition der Traganordnung repräsentierendes Sensorsignal erzeugt.

6. Einrichtung nach Anspruch 5, **dadurch gekennzeichnet, dass** die Sensoranordnung an einer Messposition der Traganordnung mehrere Sensorsignale als Abstandswerte in unterschiedlichen Raumrichtungen (UM1, UM2, UM3) erzeugt.

7. Einrichtung nach Anspruch 5 oder 6, **dadurch gekennzeichnet, dass** die Sensoranordnung Sensorsignale als Bodenabstandswerte an mehreren voneinander beabstandeten Messpositionen (SV, SH, SL, SR) erzeugt.

8. Einrichtung nach Anspruch 7, **dadurch gekennzeichnet, dass** wenigstens eine Messposition (SL, SR) gegen eine Mittellängsebene (ME) der Traganordnung (TA) seitlich versetzt ist.

9. Einrichtung nach Anspruch 7 oder 8, **dadurch gekennzeichnet, dass** die Traganordnung (TT) wenigstens zwei in Schlepprichtung relativ zueinander veränderlich positionierbare Abschnitte (T1, T2) enthält und an jedem der beiden Teile wenigstens eine Messposition (SV, SH) vorgesehen ist, zu welcher die Sensoranordnung wenigstens ein Sensorsignal (ASV, ASH) erzeugt.

10. Einrichtung nach Anspruch 9, **dadurch gekennzeichnet, dass** die Sensoranordnung ein zusätzliches, die Relativposition der wenigstens zwei Abschnitte (T1, T2) repräsentierendes Sensorsignal als Längensignal erzeugt.

11. Einrichtung nach einem der Ansprüche 1 bis 10, **dadurch gekennzeichnet, dass** die Sensoranordnung einen bildaufnehmenden Sensor enthält.

12. Einrichtung nach einem der Ansprüche 1 bis 11, **dadurch gekennzeichnet, dass** die Sensoranordnung ein unterhalb der Traganordnung auf dem Boden abrollendes Rad enthält, welches relativ zur Traganordnung höhenvariabel angeordnet ist.

13. Einrichtung nach einem der Ansprüche 1 bis 12, **dadurch gekennzeichnet, dass** wenigstens ein Sensorsignal einer Anzeigeeinrichtung im Bereich der Fahrerposition des Schleppfahrzeugs angeordnet ist.

14. Einrichtung nach einem der Ansprüche 1 bis 13, **dadurch gekennzeichnet, dass** wenigstens ein Sensorsignal der Steuereinrichtung (SE) zugeführt ist und diese das wenigstens eine Sensorsignal auswertet und automatisch die Hubeinrichtung ansteuert.

15. Einrichtung nach Anspruch 14, **dadurch gekennzeichnet, dass** eine Auswertung des wenigstens einen Sensorsignals einen Schwellwertvergleich beinhaltet.

16. Einrichtung nach Anspruch 14 oder 15, **dadurch gekennzeichnet, dass** die Auswertung des wenigstens einen Sensorsignals die Auswertung des zeitlichen Verlaufs des Sensorsignals beinhaltet.

17. Einrichtung nach einem der Ansprüche 1 bis 16, **dadurch gekennzeichnet, dass** der Steuereinrichtung ein die Fahrgeschwindigkeit des Schleppfahrzeugs repräsentierendes Geschwindigkeitssignal zugeleitet ist.

18. Einrichtung nach Anspruch 17, **dadurch gekennzeichnet, dass** die Ansteuerung der Hubeinrichtung durch die Steuereinrichtung in Abhängigkeit von der Fahrgeschwindigkeit erfolgt.

19. Einrichtung nach Anspruch 18, **dadurch gekennzeichnet, dass** die Steuereinrichtung oberhalb eines vorgebbaren Schwellwerts für die Fahrgeschwindigkeit die Traganordnung auf eine vorgebbare Höhenposition relativ zum Schleppfahrzeug einstellt und diese Höhenposition unabhängig von variierenden Positionen der Traganordnung relativ zum Boden beibehält.
